# EUROPÄISCHE PATENTSCHRIFT

(11) **EP 0 852 633 B1**
(45) Veröffentlichungstag und Bekanntmachung des Hinweises auf die Patenterteilung: **02.11.2000**
(21) Anmeldenummer: 96930163.9
(22) Anmeldetag: 04.09.1996
(51) Int. Cl.: D07B 1/06, D07B 1/16

(54) **DRAHTSEIL ZUR VERSTÄRKUNG VON GUMMIARTIKELN**
WIRE CORD FOR REINFORCING RUBBER ITEMS
CABLE METALLIQUE POUR RENFORCER DES ARTICLES EN CAOUTCHOUC

(30) Priorität: 25.09.1995 DE 19535597
(43) Veröffentlichungstag der Anmeldung: 15.07.1998
(73) Patentinhaber: DRAHTCORD SAAR GMBH & Co.KG, 66663 Merzig (DE)
(72) Erfinder: DOUJAK, Siegfried, D-66663 Merzig (DE)
(74) Vertreter: Preissner, Nicolaus, Dipl.-Ing.
(86) Internationale Anmeldenummer: EP9603883
(87) Internationale Veröffentlichungsnummer: WO9712090

(56) Entgegenhaltungen:
- BE-A- 900 175
- DE-A- 2 648 524

## Beschreibung

Die Erfindung betrifft ein Drahtseil zur Verstärkung von Gummiartikeln, insbesondere Luftreifen, aus mindestens drei um ein durchlaufendes nicht-metallisches Kernfilament angeordneten Drahtfilamenten.

Drahtseile dieser Art sind bekannt. Sie dienen insbesondere zur Verstärkung von Luftreifen wie beispielsweise Pkw- und Lkw-Reifen. Derartige Drahtseileinlagen in Reifen sind als Gürtelcordeinlagen bekannt.

Bei der Verwendung in Transporter- und Lkw-Reifen sind derartige Drahtseileinlagen oder Armierungen höheren Beanspruchungen ausgesetzt als bei einem Einsatz in Pkw-Reifen. Aus diesem Grunde sind auch Anforderungen an Drahtseile zur Verstärkung von Lkw-Reifen höher. Werden deshalb in Transporter- und Lkw-Reifen kostengünstig herzustellende Stahlcorde mit einem einfachen Aufbau verwendet, wie sie beispielsweise in Pkw-Reifen eingesetzt werden, kommt es leicht zur Ablösung der Gürtelkante.

Derartige Stahlcorde mit einem einfachen Aufbau bestehen beispielsweise aus einem Kern, der sich aus drei Drahtfilamenten mit einem Durchmesser von 0,2 mm zusammensetzt, sowie aus sechs um diesen Kern angeordneten Drahtfilamenten eines Durchmessers von 0,35 mm.

Ein derartiger Stahlcord ist einfach herzustellen und im allgemeinen problemlos zu verarbeiten. Auf Grund seiner Steifigkeit kommt es jedoch, wie schon erwähnt, leicht zur Ablösung der Gürtelkante im Reifen, so daß der Reifen unbrauchbar wird.

Bei mit einem größeren Herstellungsaufwand hergestellten Corden mit höheren Drahtzahlen (beispielsweise Stahlcorde mit einem Kernseil aus drei Drahtfilamenten mit darum herum angeordneten neun Drahtfilamenten und einer Hülllage von weiteren fünfzehn Drahtfilamenten mit jeweils einem Durchmesser von 0,22 mm sowie einem diese Konstruktion umgebenden Wendeldraht mit einem Durchmesser von 0,15 mm) ist die Gefahr einer Ablösung der Gürtelkante deutlich verringert. Auf Grund der geometrischen Zuordnung der Einzeldrähte zueinander ergeben sich jedoch bei derartigen Drahtseilen mit höheren Drahtzahlen zwangsläufig innere Hohlräume, in welche der Einbettungsgummi nicht mehr einzudringen vermag, so daß die haftende Bindung des Einbettungsgummis auf die Außenmantelabschnitte beschränkt bleibt. Darüber hinaus wirkt die in der eingeschlossenen Luft enthaltende Feuchtigkeit korrosiv von innen auf die Drahtseile und trägt zu einer vorzeitigen Alterung und Zerstörung der Drähte bei.

Aus der DE 26 48 524 A1 ist ein Drahtseil als Festigkeitsträger in Gummiartikeln bekannt, das aus drei oder mehr um einen durchlaufenden Kern aus einem nicht-metallischen kompressiblen Werkstoff zusammengedrehten massiven Metalldrähten aufgebaut ist. Insbesondere handelt es sich bei diesem nicht-metallischen kompressiblen Werkstoff um vulkanisierbaren Gummi, thermoplastischen Kunststoff, aromatisches Polyamid oder natürlichen oder synthetischen Faserstoff. Durch einen derartigen nicht-metallischen kompressiblen Werkstoff als Kern eines Drahtseils wird der sonst vorhandene Freiraum im Drahtseil nahezu oder im wesentlichen ausgefüllt. Dadurch werden Verschiebungen einzelner Außendrähte unter dem Einfluß seitlicher Druckkräfte vermieden. Dieses Ausfüllen der im Drahtseil vorhandenen Freiräume wird dadurch erreicht, daß der elastomere oder textile Kern bei der Verarbeitung des Drahtseils im Reifen den um den Kern gruppierten Stahldrähten nachgibt, so daß sich diese einander annähern können und den Kerndraht leicht verformen.

Aus der DE-PS 816 308 ist eine Verstärkungseinlage für Gegenstände aus Kautschuk bekannt, deren Drahtseile eine unvulkanisierte oder vorvulkanisierte Kautschukseele aufweisen, bei der die Einzeldrähte in Abstand voneinander liegen. Durch diese Kautschukseelen wird den Seilen eine hohe elastische Dehnung verliehen, so daß das Drahtseil eine größere Biegefähigkeit aufweist.

Aus der DE-OS 2 209 752 sind Drahtseile als Verstärkungseinlagen in Fördergurten bekannt, die beispielsweise aus um einen elastomeren Kern angeordneten Drahtfilamenten bestehen.

Demgegenüber liegt der Erfindung die Aufgabe zugrunde, ein Drahtseil der eingangs genannten Art bereitzustellen, das über einen einfachen Aufbau verfügt und somit preiswert herstellbar ist, auf der anderen Seite jedoch bei verringerter Korrosionsgefahr im Innern des Drahtseils eine gute Verankerung und Fixierung der Drahtseilkanten in dem zu verstärkenden Gummiartikel gewährleistet.

Zur Lösung dieser Aufgabe wird erfindungsgemäß ein Drahtseil zur Verstärkung von Gummiartikeln, insbesondere Luftreifen vorgeschlagen, das aus mindestens drei um ein durchlaufendes Kernfilament angeordneten Drahtfilamenten besteht, wobei das Kernfilament aus einem beim Vulkanisieren des zu verstärkenden Gummiartikels in Längsrichtung kontraktionsfähigen Werkstoff besteht. Beim Vulkanisieren eines derart erfindungsgemäß ausgestalteten Drahtseils erfolgt somit eine Längenkontraktion des die Seele des Drahtseils darstellenden Kernfilaments, d.h. das Kernfilament zieht sich in Längsrichtung des Drahtseils zusammen. Demgemäß weicht das Kernfilament von den Schnittkanten des Drahtseils zurück, so daß dort ein von den das Kernfilament umgebenden Drahtfilamenten begrenzter Hohlraum entsteht. In diesen Hohlraum kann beim Vulkanisieren Katschukmischung eindringen, wodurch eine besonders gute Verankerung des Drahtseils in dem zu verstärkenden Gummiartikel gewährleistet wird.

In vorteilhafter Ausgestaltung der Erfindung besteht das Kernfilament aus einem unverstreckten aliphatischen Polyamid, vorzugsweise aus unverstrecktem Nylon. Unverstrecktes aliphatisches Polyamid, insbesondere unverstrecktes Nylon, weist den Vorteil auf, daß es beim Vulkanisieren des zu verstärkenden Gummiartikels in dem Drahtseil nicht nur in Längsrichtung schrumpft, sondern daß bei diesem Schrumpfprozeß gleichzeitig der Durchmesser des aliphatischen Polyamids zunimmt. Durch diese Zunahme des Durchmessers dringt das Polyamid in die zwischen den das Kernfilament umgebenden Drahtfilamenten vorhandenen Hohlräume ein und füllt diese weitgehend aus. Bei der Verwendung von unverstrecktem aliphatischem Polyamid, insbesondere unverstrecktem Nylon, als Kernfilament bietet das erfindungsgemäße Drahtseil somit zum einen den Vorteil der besseren Fixierung der Drahtseilschnittkante in dem zu verstärkenden Gummiartikel, da dessen Gummimischung in die durch den geschrumpften Polyamidkern geschaffenen Hohlräume am Ende des Drahtseils eindringen kann. Zum anderen bietet das erfindungsgemäße Drahtseil den Vorteil, daß der geschrumpfte Polyamidkern sich in das Innere des Drahtseils zurückzieht und dort die Hohlräume zwischen den einzelnen Drahtfilamenten ausfüllt, so daß eine Korrosion der Einzeldrähte aus dem Inneren des Drahtseils heraus vermieden wird.

Die Erfindung ist anhand eines Ausführungsbeispiels in der Zeichnung dargestellt und wird im folgenden näher erläutert.
- Figur 1: zeigt in schematischer Darstellung einen Querschnitt durch ein erfindungsgemäßes Drahtseil zur Verstärkung von Gummiartikeln vor dem Vulkanisieren des zu verstärkenden Gummiartikels.
- Figur 2: zeigt das in Figur 1 dargestellte erfindungsgemäße Drahtseil nach dem Vulkanisieren des zu verstärkenden Gummiartikels.
- Figur 3: zeigt in schematischer Darstellung einen Schnitt durch das in Figur 2 dargestellte Drahtseil nach dem Vulkanisieren des zu verstärkenden Gummiartikels gemäß der Schnittlinie III-III.

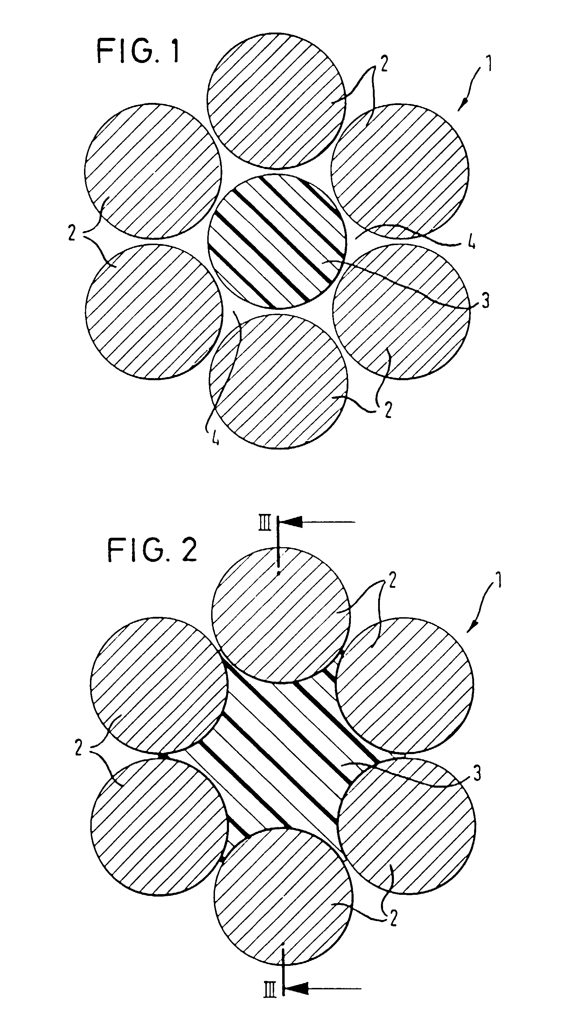

In Figur 1 ist in schematischer Darstellung ein Querschnitt durch ein erfindungsgemäßes Drahtseil 1 zur Verstärkung von Gummiartikeln, insbesondere Luftreifen, dargestellt. Das erfindungsgemäße Drahtseil 1 umfaßt ein Kernfilament 3, um welches herum parallel und in symmetrischer Anordnung sechs Drahtfilamente 2 angeordnet sind. Im dargestellten Beispiel weisen sowohl die Drahtfilamente 2 als auch das Kernfilament 3 jeweils den gleichen Durchmesser auf.

Der Durchmesser der Drahtfilamente 2 als auch des Kernfilaments 3 werden abhängig von dem zukünftigen Einsatz des Drahtseils, also abhängig von Reifentyp und Reifengröße des zu verstärkenden Reifens, ausgewählt. Im dargestellten Ausführungsbeispiel kann der Durchmesser beispielsweise 0,35 mm betragen. Es sind jedoch auch andere Durchmesser möglich. Natürlich sind auch Drahtseile denkbar, bei welchen die Drahtfilamente 2 und das Kernfilament 3 einen unterschiedlichen Durchmesser aufweisen.

Auf Grund des kreisförmigen Querschnitts der Drahtfilamente 2 und des Kernfilaments 3 kommt es jeweils zwischen zwei benachbarten Drahtfilamenten 2 und dem Kernfilament 3 zur Bildung eines Hohlraumes 4.

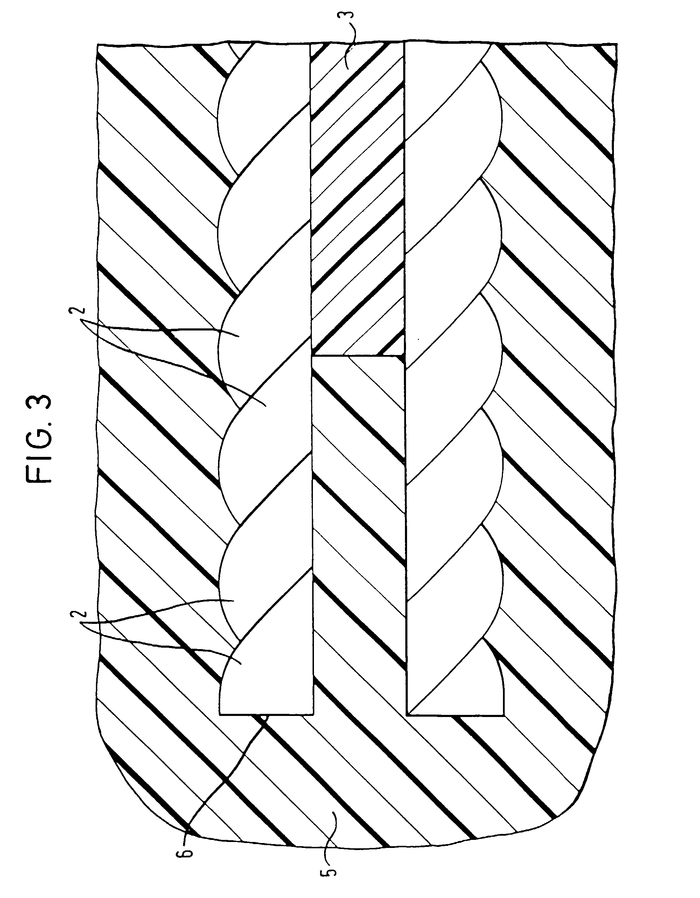

Erfindungsgemäß besteht das Kernfilament 3 des in Figur 1 dargestellten Drahtseils 1 aus einem Werkstoff, der beim Vulkanisieren des zu verstärkenden Gummiartikels in Längsrichtung kontraktionsfähig ist. Diese Eigenschaft wird ausgenutzt, um in dem zu verstärkenden Gummiartikel, insbesondere einem Luftreifen, eine feste Verankerung des Drahtseils zu schaffen. Dazu wird das dargestellte Drahtseil 1 nach dem Kalandrieren und dem Schneiden der Gürtellagen in einem sogenannten Reifenrohling verarbeitet, der anschließend vulkanisiert wird. Beim Vulkanisieren zieht sich dann das Kernfilament 3 in seiner Länge zusammen, d.h. es schrumpft in Richtung der Längsachse des Drahtseils 1 zu dessen Mittelachse hin zusammen (vgl. Figur 3).

Dadurch werden an den Schnittkanten 6 des Drahtseils 1 Hohlräume geschaffen, in welche die Vulkanisiermischung eindringen kann. Dadurch entsteht ein Ineinandergreifen des Drahtseils, insbesondere dessen Drahtfilamente 2, mit dem zu verstärkenden Gummiartikel.

In Figur 2 ist ein Schnitt durch das in Figur 1 dargestellte erfindungsgemäße Drahtseil 1 nach dem Vulkanisieren dargestellt. Durch sein Zusammenschrumpfen hat sich das Kernfilament 3 nicht nur in der Länge geändert, sondern gleichzeitig hat eine Zunahme seines Durchmessers stattgefunden. Dies führt dazu, daß das Kernfilament 3 sich in die vorstehend beschriebenen Hohlräume 4 hinein ausdehnt und diese im wesentlichen ausfüllt. Wie aus Figur 2 ersichtlich, ist der von den kreisförmig angeordneten Drahtfilamenten 2 eingeschlossene Raum im wesentlichen vollständig von dem nicht-metallischen Werkstoff des Kernfilaments 3 ausgefüllt, so daß dort im wesentlichen keine Hohlräume mehr vorhanden sind.

Durch dieses erfindungsgemäße Ausfüllen des im wesentlichen gesamten Raums, der von den Drahtfilamenten einschlossen wird, wird die Gefahr von Korrosion des Drahtseils 1 von innen heraus auf Grund eingeschlossener Feuchtigkeit stark verringert.

Figur 3 zeigt in schematischer Darstellung einen Schnitt in Längsrichtung durch das in Figur 2 dargestellte erfindungsgemäße Drahtseil nach dem Vulkanisieren gemäß der Schnittlinie III-III. Figur 3 zeigt das erfindungsgemäße Drahtseil 1 im eingebetteten Zustand in dem zu verstärkenden Gummiartikel 5. Der Gummiartikel 5, der in Figur 2 aus Gründen einer übersichtlicheren Darstellungsweise nicht dargestellt wurde, ist in Figur 3 im Ausschnitt gezeigt. Bei dem zu verstärkenden Gummiartikel 5 handelt es sich insbesondere um einen Luftreifen.

Wie der Längsschnitt der Figur 3 veranschaulicht, hat sich das von den Drahtfilamenten 2 umgebene Kernfilament 3 während des Vulkanisierens zusammengezogen, so daß im Breich der Schnittkante 6 zwischend en Drahtfilamenten 2 ein Hohlraum entstanden ist, in welchen die Kautschukmischung des zu verstärkenden Gummiartikels 5 eindringen konnte.

Durch dieses erfindungsgemäße Eindringen wird ein Ineinandergreifen des Drahtseils, insbesondere der Drahtfilamente 2, und des zu verstärkenden Gummiartikels 5 im Bereich der Schnittkante 6 erreicht, so daß eine besonders gute Einbettung und Verbindung des Drahtseils 1 in dem zu verstärkenden Gummiartikel 5 vorliegt.

Erfindungsgemäß wird demnach eine gute Fixierung der Drahtseilkante 6 in dem zu verstärkenden Gummiartikel 5 erreicht und gleichzeitig die Korrosionsgefahr verringert.

Als nicht-metallischer Werkstoff für das Kernfilament 3 eignet sich insbesondere ein unverstrecktes aliphatisches Polyamid, insbesondere unverstrecktes Nylon. Bei der Vulkanisation schrumpft ein derartiges Kernfilament 3 aus unverstrecktem Nylon um etwa 5 bis 7 %, wodurch an der Schnittkante 6 des Drahtseils 1 ein ausreichend großer Hohlraum entsteht, in welchen die Gummimischung eindringen und sich dort mit dem Messing der Oberfläche der Drahtfilamente 2 festhaftend verbinden kann.

## Patentansprüche

1. Drahtseil zur Verstärkung von Gummiartikeln, insbesondere Luftreifen, aus mindestens drei um ein durchlaufendes nicht-metallisches Kernfilament (3) angeordneten Drahtfilamenten (2), dadurch gekennzeichnet, daß das Kernfilament (3) aus einem beim Vulkanisieren des zu verstärkenden Gummiartikels (5) in Längsrichtung kontraktionsfähigen Werkstoff besteht.

2. Drahtseil nach Anspruch 1, dadurch gekennzeichnet, daß das Kernfilament (3) aus einem unverstrecktem aliphatischen Polyamid besteht.

3. Drahtseil nach Anspruch 2, dadurch gekennzeichnet, daß das Kernfilament (3) aus unverstrecktem Nylon besteht.

4. Drahtseil nach einem der Ansprüche 1 bis 3, dadurch gekennzeichnet, daß die Drahtfilamente (2) den gleichen Durchmesser aufweisen.

5. Drahtseil nach einem der Ansprüche 1 bis 4, dadurch gekennzeichnet, daß die Drahtfilamente (2) und das Kernfilament (3) vor dem Vulkanisieren des zu verstärkenden Gummiartikels (5) den gleichen Durchmesser aufweisen.

## Claims

1. A wire cord for reinforcing rubber items, more particularly pneumatic tyres, comprising at least three wire filaments (2) arranged about a continuous non-metallic core filament (3) characterized in that said core filament (3) consists of a material capable of longitudinal contraction when said rubber item (5) to be reinforced is vulcanized.

2. The wire cord as set forth in claim 1, characterized in that said core filament (3) consists of a non-drawn aliphatic polyamide.

3. The wire cord as set forth in claim 2, characterized in that said core filament (3) consists of non-drawn nylon.

4. The wire cord as set forth in any of the claims 1 to 3, characterized in that said wire filaments (2) have the same diameter.

5. The wire cord as set forth in any of the claims 1 to 4, characterized in that said wire filaments (2) and said core filament (3) have the same diameter prior to vulcanization of said rubber item (5) to be reinforced.

## Revendications

1. Câble métallique pour renforcer des articles en caoutchouc, en particulier des pneumatiques, constitué par au moins trois filaments métalliques (2) disposés autour d'un filament de noyau continu non métallique (3), caractérisé en ce que le filament de noyau (3) est constitué en un matériau susceptible de se contracter en direction longitudinale lors de la vulcanisation de l'article en caoutchouc à renforcer (5).

2. Câble métallique selon la revendication 1, caractérisé en ce que le filament de noyau (3) est constitué en un polyamide aliphatique non étiré.

3. Câble métallique selon la revendication 2, caractérisé en ce que le filament de noyau (3) est constitué en Nylon non étiré.

4. Câble métallique selon l'une quelconque des revendications 1 à 3, caractérisé en ce que les filaments métalliques (2) présentent le même diamètre.

5. Câble métallique selon l'une quelconque des revendications 1 à 4, caractérisé en ce que les filaments métalliques (2) et le filament de noyau (3) présentent le même diamètre avant la vulcanisation de l'article en caoutchouc à renforcer (5).
